# EUROPÄISCHE PATENTANMELDUNG

(11) **EP 2 159 542 A2**
(43) Veröffentlichungstag der Anmeldung: **03.03.2010**
(21) Anmeldenummer: 09164378.3
(22) Anmeldetag: 02.07.2009
(51) Int. Cl.: G01C 21/34

(54) **Verfahren und Vorrichtung zur Treibstoffverbrauchsermittlung**

(30) Priorität: 29.08.2008 DE 102008041677
(71) Anmelder: Robert Bosch GmbH, 70442 Stuttgart (DE)
(72) Erfinder: Leicht, Holger, 71296 Heimsheim (DE)

(57) **Zusammenfassung**

Die vorliegende Erfindung betrifft ein Verfahren zur Treibstoffverbrauchsermittlung zwischen einer Startposition und einer Zielposition. Um ein Verfahren zur Treibstoffverbrauchsermittlung zu schaffen, welches es dem Kraftfahrzeugführer ermöglicht, unter Berücksichtigung des Treibstoffverbrauchs eine persönliche Routenwahlentscheidung zu treffen, wird ein Gesamttreibstoffverbrauch zwischen der Startposition und der Zielposition durch eine Ausgabeeinrichtung (4, 5) ausgegeben.

## Beschreibung

### Stand der Technik

Die vorliegende Erfindung betrifft ein Verfahren zur Treibstoffverbrauchsermittlung nach dem Oberbegriff des Anspruchs 1 und eine Vorrichtung zur Treibstoffverbrauchsermittlung nach dem Oberbegriff des Anspruchs 8. Die vorliegende Erfindung betrifft ferner ein Navigationsverfahren, welches ein Verfahren zur Treibstoffverbrauchsermittlung gemäß einer bevorzugten Ausführungsform umfasst, und eine Navigationsvorrichtung, welche eine Vorrichtung zur Treibstoffverbrauchsermittlung gemäß einer bevorzugten Ausführungsform umfasst.

Ein solches Verfahren zur Treibstoffverbrauchsermittlung ist in der DE 196 05 458 offenbart. Das Verfahren ist in einem Navigationsverfahren eingeschlossen und wird von einer Navigationsvorrichtung ausgeführt, die in einem Kraftfahrzeug eingebaut ist. Die Navigationsvorrichtung bestimmt die Fahrtroute, welche voraussichtlich den niedrigsten Treibstoffverbrauch hat, von einer Startposition zu einer Zielposition und führt eine Routenführung entlang dieser Route durch.

Ein Nachteil liegt jedoch darin, dass der Kraftfahrzeugführer keine Möglichkeit hat, den Treibstoffverbrauch der Route mit dem niedrigsten Treibstoffverbrauch zu überprüfen, und sich auf Grundlage der Treibstoffverbrauchs beispielsweise für eine Route zu entscheiden, die zu einem etwas erhöhten Treibstoffverbrauch führt, aber eine wesentlich geringere Fahrtzeit erfordert.

### Offenbarung der Erfindung

Der vorliegenden Erfindung liegt die Aufgabe zugrunde, ein Verfahren und eine Vorrichtung zum Ermitteln eines Treibstoffverbrauchs zu schaffen, die es dem Kraftfahrzeugführer ermöglichen, unter Berücksichtigung des Treibstoffverbrauchs eine persönliche Routenwahlentscheidung zu treffen.

Die der Erfindung zugrunde liegende Aufgabe wird durch ein Verfahren zur Treibstoffverbrauchsermittlung mit den Merkmalen des kennzeichnenden Teils des Patentanspruchs 1 und eine Vorrichtung zur Treibstoffverbrauchsermittlung mit den Merkmalen des kennzeichnenden Teils des Patentanspruchs 8 gelöst.

Die vorliegende Erfindung betrifft ein Verfahren zur Treibstoffverbrauchsermittlung zwischen einer Startposition und einer Zielposition, wobei der Gesamttreibstoffverbrauch zwischen der Startposition und der Zielposition durch eine Ausgabeeinrichtung ausgegeben wird. Der Gesamttreibstoffverbrauch wird in Volumeneinheiten oder Gewichtseinheiten gemessen. Es kann sich dabei sowohl um einen voraussichtlichen Treibstoffverbrauch als auch um einen tatsächlichen Treibstoffverbrauch handeln.

In einer bevorzugten Ausführungsform wird ein gegenwärtiger Treibstoffverbrauch erfasst, und wird der Gesamttreibstoffverbrauch aus dem gegenwärtigen Treibstoffverbrauch berechnet. Der gegenwärtige Treibstoffverbrauch wird in Volumeneinheiten oder Gewichtseinheiten pro Zeiteinheit bestimmt. Bei dem Gesamttreibstoffverbrauch handelt es sich um einen tatsächlichen Treibstoffverbrauch. Dieses Verfahren ermöglicht es dem Kraftfahrzeugführer, eine Route unter mehreren Routen hinsichtlich des Treibstoffverbrauchs auszuwählen, nachdem der Kraftfahrzeugführer die einzelnen Routen abgefahren ist.

Das Verfahren ist daher für ein Ziel geeignet, welches der Kraftfahrzeugführer oft hat.

In einer Weiterbildung der bevorzugten Ausführungsform wird der gegenwärtige Treibstoffverbrauch mittels einer Durchflussmesseinrichtung erfasst. Der Treibstoffverbrauch wird selbst dann erfasst, wenn das Kraftfahrzeug steht und ist daher genau bestimmt.

In noch einer Weiterbildung der bevorzugten Ausführungsform ist die Startposition eine Position des Kraftfahrzeugs, bei der eine Starteingabe durchgeführt wird, und ist die Zielposition eine Position des Kraftfahrzeugs, bei der eine Zieleingabe durchgeführt wird. Dies ermöglicht eine einfache Handhabung und erfordert einen geringen technischen Aufwand.

In einer alternativen bevorzugten Ausführungsform gibt der Gesamttreibstoffverbrauch einen Treibstoffverbrauch an, der bei der Wahl einer Route gemäß einer Routenberechnungseinrichtung voraussichtlich verbraucht wird. Der Kraftfahrzeugführer erhält somit bereits eine Prognose vor Fahrtantritt. Dieses Verfahren ist auch für Ziele geeignet, die der Kraftfahrzeugführer selten anfährt oder noch nicht angefahren ist.

In einer Weiterbildung der alternativen bevorzugten Ausführungsform wird mindestens ein weiterer Gesamttreibstoffverbrauch des Kraftfahrzeugs zwischen der Startposition und der Zielposition ermittelt, wird der mindestens eine weitere Gesamttreibstoffverbrauch durch die Ausgabeeinrichtung ausgegeben, und gibt der mindestens eine weitere Gesamttreibstoffverbrauch einen weiteren Treibstoffverbrauch an, der bei der Wahl einer weiteren Route gemäß der Routenberechnungseinrichtung voraussichtlich verbraucht wird. Der Kraftfahrzeugführer kann sich unter Berücksichtigung des Treibstoffverbrauchs zwischen mehreren Routen entscheiden.

Die vorliegende Erfindung betrifft ferner ein Navigationsverfahren, wobei das Navigationsverfahren die alternative Ausführungsform des Verfahrens zur Treibstoffverbrauchsermittlung einschließt. Das Verfahren lässt sich besonders einfach in einem Navigationsverfahren implementieren, da für das Navigationsverfahren und das Verfahren zur Treibstoffverbrauchsermittlung viele identische Einrichtungen benötigt werden.

Die vorliegende Erfindung betrifft ferner eine Vorrichtung zur Treibstoffverbrauchsermittlung zwischen einer Startposition und einer Zielposition, wobei eine Einrichtung zur Gesamttreibstoffverbrauchsberechnung vorgesehen ist, und wobei die Einrichtung zur Gesamttreibstoffverbrauchsberechnung eingerichtet ist, einen tatsächlichen Gesamttreibstoffverbrauch zwischen der Startposition und der Zielposition aus einem gegenwärtigen Treibstoffverbrauch zu berechnen, der von einer Einrichtung zur Treibstoffverbrauchserfassung erfasst wurde.

In einer bevorzugten Ausführungsform sind eine Einrichtung zur Treibstoffverbrauchserfassung und eine Einrichtung zur Gesamttreibstoffverbrauchsberechnung vorgesehen, wobei die Einrichtung zur Treibstoffverbrauchserfassung eingerichtet ist, einen gegenwärtigen Treibstoffverbrauch zu erfassen, wobei die Einrichtung zur Gesamttreibstoffverbrauchsberechnung eingerichtet ist, einen tatsächlichen Gesamttreibstoffverbrauch aus dem gegenwärtigen Treibstoffverbrauch zu berechnen, und wobei eine Start- und Zieleingabeeinrichtung vorgesehen sind.

In einer alternativen bevorzugten Ausführungsform ist eine Einrichtung zur Gesamttreibstoffverbrauchsberechnung vorgesehen, die eingerichtet ist, einen voraussichtlichen Gesamttreibstoffverbrauch zu berechnen, der bei der Wahl einer Route gemäß einer Routenberechnungseinrichtung voraussichtlich verbraucht wird.

In einer Weiterbildung der alternativen bevorzugten Ausführungsform ist die Einrichtung zur Gesamttreibstoffverbrauchsberechnung eingerichtet, mindestens einen weiteren voraussichtlichen Gesamttreibstoffverbrauch zu berechnen, der bei der Wahl einer weiterem Route zwischen der Startposition und der Zielposition gemäß der Routenberechnungseinrichtung voraussichtlich verbraucht wird.

Die vorliegende Erfindung betrifft ferner eine Navigationsvorrichtung, die eine Vorrichtung gemäß der alternativen bevorzugten Ausführungsform einschließt.

### Kurze Beschreibung der Zeichnungen

Im Folgenden wird die Erfindung mit Bezugnahme auf die Zeichnungen näher beschrieben. Es zeigen:
FIG. 1 eine schematische Ansicht einer Vorrichtung zum Ermitteln eines Gesamttreibstoffverbrauchs gemäß einer ersten Ausführungsform;
FIG. 2 eine schematische Ansicht eines Navigationssystems mit einer Navigationsvorrichtung, in welcher eine Vorrichtung zum Ermitteln eines Gesamttreibstoffverbrauchs gemäß einer zweiten Ausführungsform integriert ist; und
FIG. 3 ein Flussdiagramm eines Verfahrens zum Ermitteln eines Gesamttreibstoffverbrauchs.

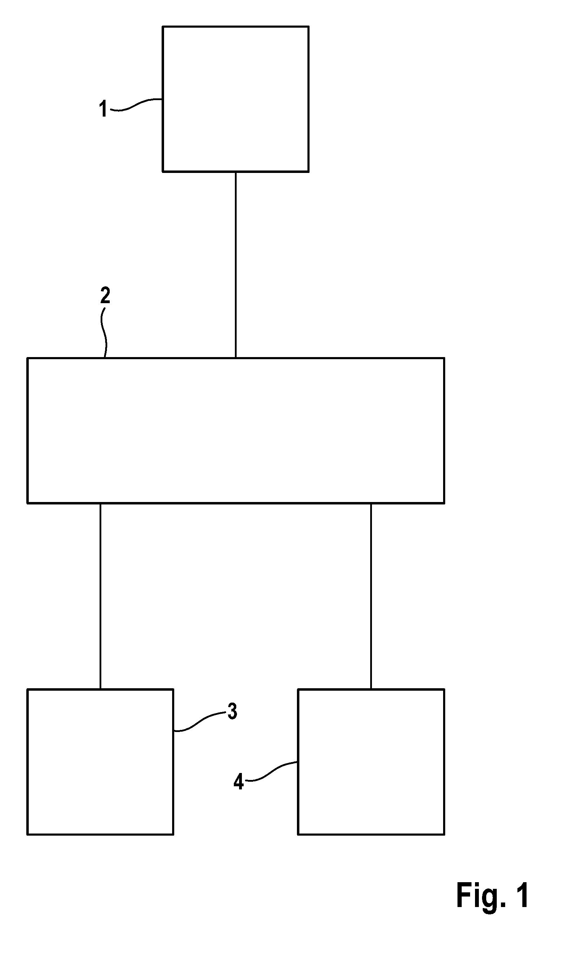

FIG. 1 zeigt eine schematische Ansicht einer Vorrichtung zur Treibstoffverbrauchsermittlung gemäß einer ersten Ausführungsform, die in einem Kraftfahrzeug eingebaut ist. Die Vorrichtung zur Treibstoffverbrauchsermittlung umfasst einen Durchflussmesser 1, eine Recheneinheit 2, eine Eingabeeinheit 3 und eine Ausgabeeinheit 4. Der Durchflussmesser 1 misst einen gegenwärtigen Treibstoffdurchfluss durch eine Treibstoffzuleitung und somit einen gegenwärtigen Treibstoffverbrauch. Messwerte des gegenwärtigen Treibstoffverbrauchs sendet der Durchflussmesser 1 mit einem festen Takt an die Recheneinheit 2. Die Eingabeeinheit 3 weist einen Startknopf, einen Stoppknopf und einen Resetknopf auf. Wenn ein Kraftfahrzeugführer auf den Startknopf drückt, erzeugt die Eingabeeinrichtung 3 ein Startsignal und sendet das Startsignal an die Recheneinheit 3. Die Position, bei der sich das Kraftfahrzeug befindet, wenn der Kraftfahrzeugführer auf den Startknopf drückt ist die Startposition. Auf den Empfang des Startsignals hin beginnt die Recheneinheit 3, aus den empfangenen Messwerten des gegenwärtigen Treibstoffverbrauchs die seit dem Startsignal verbrauchte Gesamttreibstoffmenge zu berechnen, und den aktuellen Wert der verbrauchten Treibstoffmenge, d.h. den letzten ermittelten Wert, an die Ausgabeeinheit 4 zu senden. Die Ausgabeeinheit 4 zeigt den letzten ermittelten Wert auf einer Anzeige an. Wenn der Kraftfahrzeugführer auf den Stoppknopf drückt, erzeugt die Eingabeeinrichtung 3 ein Stoppsignal und sendet das Stoppsignal an die Recheneinheit 3. Auf den Empfang des Stoppsignals hin hört die Recheneinheit 3 damit auf, aus den empfangenen Messwerten des gegenwärtigen Treibstoffverbrauchs die verbrauchte Gesamttreibstoffmenge zu berechnen und deren Wert an die Ausgabeeinheit 4 zu senden. Die Position, bei der sich das Kraftfahrzeug befindet, wenn der Kraftfahrzeugführer auf den Stoppknopf drückt ist die Zielposition. Die Ausgabeeinheit zeigt weiterhin den Wert der Gesamttreibstoffmenge an. Wenn der Kraftfahrzeugführer auf den Resetknopf drückt, erzeugt die Eingabeeinrichtung 3 ein Resetsignal und sendet das Resetsignal an die Recheneinheit 3. Auf den Empfang des Resetsignals hin erzeugt die Recheneinheit 3 einen Wert 0 für die verbrauchte Gesamttreibstoffmenge und sendet den Wert 0 an die Ausgabeeinheit 4. Die Ausgabeeinheit 4 zeigt diesen Wert 0 auf der Anzeige an. Durch Drücken auf den Starknopf kann die Berechnung der Gesamttreibstoffmenge erneut gestartet werden.

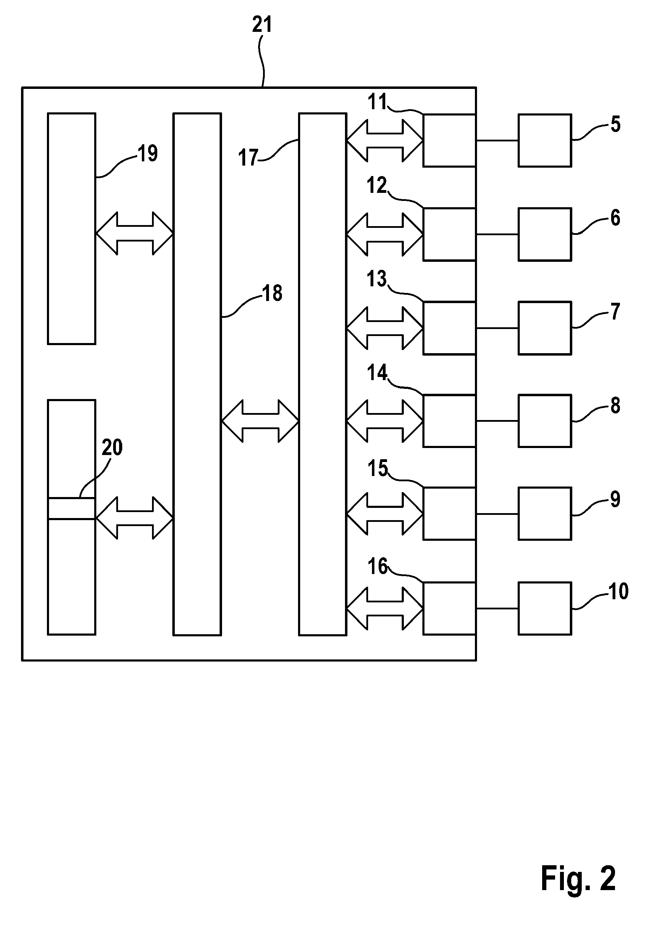

FIG. 2 eine schematische Ansicht eines Navigationssystems mit einer Navigationsvorrichtung 21, in welcher eine Vorrichtung zum Ermitteln eines Gesamttreibstoffverbrauchs gemäß einer zweiten Ausführungsform integriert ist. Das Navigationssystem ist in einem Kraftfahrzeug eingebaut und umfasst die Navigationsvorrichtung 21, eine Anzeigeeinrichtung 5, eine Eingabeeinrichtung 6, eine GPS-Empfangseinrichtung 7, eine Kartenspeichereinrichtung 8, eine Zusatzspeichereinrichtung 9 und eine Empfangseinrichtung 10 für Daten von einem Motormanagementsystem. Die Navigationsvorrichtung 21 ist als eine Von-Neumann-Maschine ausgebildet. Die Navigationsvorrichtung 21 umfasst einen zentralen Prozessor 19, einen Arbeitsspeicher 20, einen Eingabe/Ausgabe-Prozessor 17 und Verbindungswege (Bus) 18. Der zentrale Prozessor 19 arbeitet ein Maschinenprogramm ab, das im dem Arbeitsspeicher 20 gespeichert ist und ein Navigationsverfahren umfasst. Der Eingabe/ Ausgabe-Prozessor 17 greift über eine Schnittstelle 11 für die Anzeigeeinrichtung 5, eine Schnittstelle 12 für die Eingabeeinrichtung 6, eine Schnittstelle 13 für die GPS-Empfangseinrichtung 7, eine Schnittstelle 14 für die Kartenspeichereinrichtung 8, eine Schnittstelle 15 für die Zusatzspeichereinrichtung 9, eine Schnittstelle 17 für die Empfangseinrichtung 10 für Daten von dem Motormanagementsystem auf die Anzeigeeinrichtung 5, die Eingabeeinrichtung 6, die GPS-Empfangseinrichtung 7, die Kartenspeichereinrichtung 8, die Zusatzspeichereinrichtung 9 bzw. die Empfangseinrichtung 10 für Daten von dem Motormanagementsystem zu. Die Anzeigeeinrichtung 5 umfasst einen LCD-Bildschirm oder ein anderes, an sich bekanntes Display, um eine Karte mit der Position des Kraftfahrzeugs und die Route anzuzeigen. Über die Eingabeeinrichtung 6 gibt der Kraftfahrzeugführer Eingaben wie einen Zielort, Routenoptionen und Darstellungsoptionen usw. ein. Bei der Eingabeeinrichtung 6 kann es sich um eine Tastatur, einen Taster, Schalter usw. oder einen Sensorbildschirm (Touchscreen) handeln, der in der Anzeigeeinrichtung 5 integriert ist. Die GPS-Empfangseinrichtung 7 umfasst eine Empfangsantenne, die GPS-Signale von mehreren Satelliten empfängt, aus denen die Navigationsvorrichtung 21 die Position des Verwenders berechnet. Die Kartenspeichereinrichtung 8 enthält geographische Information wie Straßenverläufe usw.. In der Zusatzspeichereinrichtung 9 sind zusätzlich Daten gespeichert, welche die Navigationsvorrichtung 21 von dem Motormanagementsystem erhalten hat. Diese Daten umfassen Parameter wie den Treibstoffverbrauch und die Fahrtgeschwindigkeit zu zurückgelegten Strecken und/oder bestimmten Arten von Strecken. Die Empfangseinrichtung 10 für Daten von dem Motormanagementsystem ist über eine Datenleitung mit dem Motormanagementsystem verbunden. Über die Datenleitung werden beispielsweite Werte für den gegenwärtigen Treibstoffverbrauch oder die Kraftfahrzeuggeschwindigkeit an die Empfangseinrichtung 10 übermittelt. Diese Daten werden in der Zusatzspeichereinrichtung 9 gespeichert.

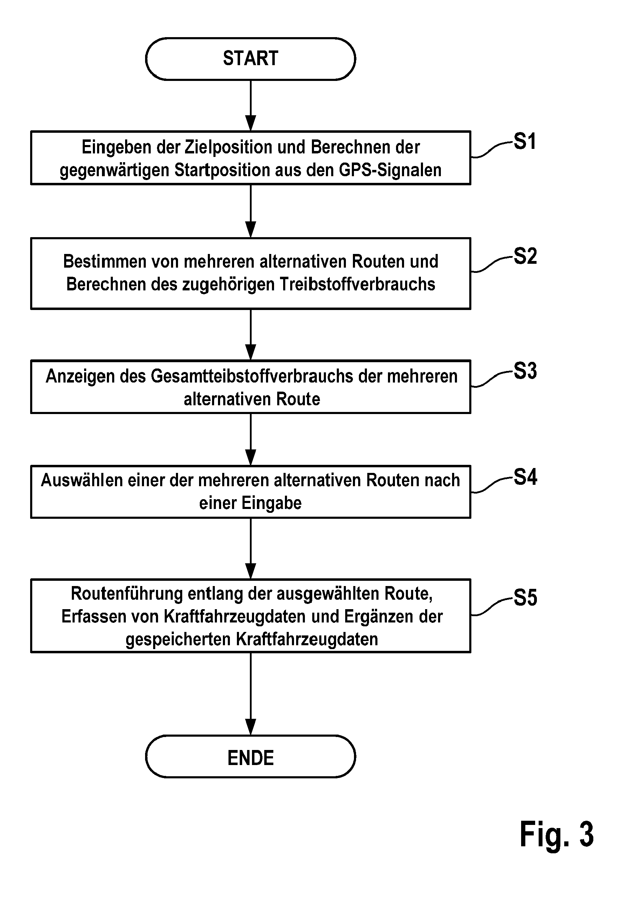

FIG. 3 zeigt ein Flussdiagramm eines Verfahrens zur Treibstoffverbrauchsermittlung. Das Verfahren ist in einem Navigationsverfahren integriert. Im Schritt S1 gibt der Kraftfahrzeugführer eine Zielposition über die Eingabeeinrichtung 6 ein. Gleichzeitig empfängt die GPS-Empfangseinrichtung 7 GPS-Signale. Die Eingabedaten und die GPS-Signale werden zu der Navigationsvorrichtung 21 weitergeleitet. Die Navigationsvorrichtung 21 berechnet auf Basis der GPS-Signale die gegenwärtige Position, d.h. die Startposition. Im Schritt S2 bestimmt die Navigationsvorrichtung mehrere alternative Routen von der Startposition zu der Zielposition. Jede der alternativen Routen ist beispielsweise eine Route, die nach einem bestimmten Optimierungskriterium optimiert wurde. Bei dem Optimierungskriterium handelt es sich beispielsweise um die Streckenlänge, die Fahrtdauer, den Treibstoffverbrauch oder die Fahrtkosten. Es kann sich bei den alternativen Routen aber auch um die besten Routen für nur ein Optimierungskriterium handeln (zum Beispiel Route mit der kürzesten Fahrtstrecke, Route mit der zweitkürzesten Fahrtstrecke, Route mit der drittkürzesten Fahrtstrecke etc.). Für jede der alternativen Routen bestimmt die Navigationsvorrichtung die Fahrtstrecke, die Fahrtdauer, den Treibstoffverbrauch und die Fahrtkosten. Dazu nutzt die Navigationsvorrichtung Daten, die in der Kartenspeichereinrichtung 8 enthalten sind. Sie kann aber auch zusätzliche Daten nutzen, die in der Zusatzspeichereinrichtung 9 enthalten sind. Beispielsweise kann die Zusatzspeichereinrichtung 9 Informationen über den Kraftstoffpreis oder den Fahrstil des Fahrers enthalten. Im Schritt S3 werden die Fahrtstrecke, die Fahrtdauer, der Treibstoffverbrauch und die Fahrtkosten für die alternativen Routen durch die Anzeigeeinrichtung 3 dargestellt. Im Schritt S4 wählt die Navigationsvorrichtung 21 gemäß einer Eingabe des Kraftfahrzeugführers eine der mehreren alternativen Routen aus. Im Schritt S5 führt die Navigationsvorrichtung 21 eine Routenführung entlang der ausgewählten Route durch. Gleichzeitig werden Kraftfahrzeugdaten von dem Motormanagementsystem empfangen und in der Zusatzspeichereinrichtung 9 gespeichert. Die Kraftfahrzeugdaten können dabei im Zusammenhang mit der zugehörigen Strecke oder der zugehörigen Straßenart gespeichert werden. Es können auch aus den empfangenen Kraftfahrzeugdaten und bereits vorhandenen Kraftfahrzeugdaten statistisch genauere Daten gebildet werden und die bereits vorhandenen Daten durch die statistisch genaueren Daten ersetzt werden.

## Patentansprüche

1. Verfahren zur Treibstoffverbrauchsermittlung zwischen einer Startposition und einer Zielposition, **dadurch gekennzeichnet, dass** ein Gesamttreibstoffverbrauch zwischen der Startposition und der Zielposition durch eine Ausgabeeinrichtung (4, 5) ausgegeben wird (S3).

2. Verfahren nach Anspruch 1, **dadurch gekennzeichnet, dass** ein gegenwärtiger Treibstoffverbrauch erfasst wird, und dass der Gesamttreibstoffverbrauch aus dem gegenwärtigen Treibstoffverbrauch berechnet wird.

3. Verfahren nach Anspruch 2, **dadurch gekennzeichnet, dass** der gegenwärtige Treibstoffverbrauch mittels einer Durchflussmesseinrichtung (1) erfasst wird.

4. Verfahren nach Anspruch 2 oder Anspruch 3, **dadurch gekennzeichnet, dass** die Startposition eine Position des Kraftfahrzeugs ist, bei der eine Starteingabe durchgeführt wird, und dass die Zielposition eine Position des Kraftfahrzeugs ist, bei der eine Zieleingabe durchgeführt wird.

5. Verfahren nach Anspruch 1, **dadurch gekennzeichnet, dass** der Gesamttreibstoffverbrauch einen Treibstoffverbrauch angibt, der bei der Wahl einer Route gemäß einer Routenberechnungseinrichtung voraussichtlich verbraucht wird.

6. Verfahren nach Anspruch 5, **dadurch gekennzeichnet, dass** mindestens ein weiterer Gesamttreibstoffverbrauchs des Kraftfahrzeugs zwischen der Startposition und der Zielposition ermittelt wird (S2), dass der mindestens eine weitere Gesamttreibstoffverbrauch durch die Ausgabeeinrichtung (4, 5) ausgegeben wird (S3), und dass der mindestens eine weitere Gesamttreibstoffverbrauch eine weitere Treibstoffmenge angibt, die bei der Wahl einer weiteren Route gemäß der Routenberechnungseinrichtung (21) voraussichtlich verbraucht wird.

7. Navigationsverfahren, **dadurch gekennzeichnet, dass** das Navigationsverfahren ein Verfahren nach einem der Ansprüche 5 oder 6 einschließt.

8. Vorrichtung zur Treibstoffverbrauchsermittlung zwischen einer Startposition und einer Zielposition, **dadurch gekennzeichnet, dass** eine Ausgabeeinrichtung (4, 5) vorgesehen ist, die eingerichtet ist, einen Gesamttreibstoffverbrauch zwischen der Startposition und der Zielposition auszugeben.

9. Vorrichtung nach Anspruch 8, **dadurch gekennzeichnet, dass** eine Einrichtung (2) zur Gesamttreibstoffverbrauchsberechnung vorgesehen ist, dass die Einrichtung zur Gesamttreibstoffverbrauchsberechnung (2) eingerichtet ist, einen tatsächlichen Gesamttreibstoffverbrauch zwischen der Startposition und der Zielposition aus einem gegenwärtigen Treibstoffverbrauch zu berechnen, der von einer Einrichtung zur Treibstoffverbrauchserfassung (1) erfasst wurde, und dass eine Start- und Zieleingabeeinrichtung (3) vorgesehen sind.

10. Vorrichtung nach Anspruch 8, **dadurch gekennzeichnet, dass** eine Einrichtung (19) zur Gesamttreibstoffverbrauchsberechnung vorgesehen ist, die eingerichtet ist, einen voraussichtlichen Gesamttreibstoffverbrauch zu berechnen, der bei der Wahl einer Route gemäß einer Routenberechnungseinrichtung (21) voraussichtlich verbraucht wird.

11. Vorrichtung nach Anspruch 10, **dadurch gekennzeichnet, dass** die Einrichtung (19) zur Gesamttreibstoffverbrauchsberechnung eingerichtet ist, mindestens einen weiteren voraussichtlichen Gesamttreibstoffverbrauch zu berechnen, der bei der Wahl einer weiterem Route zwischen der Startposition und der Zielposition gemäß der Routenberechnungseinrichtung (21) voraussichtlich verbraucht wird.

12. Navigationsvorrichtung, **dadurch gekennzeichnet, dass** die Navigationsvorrichtung (21) eine Vorrichtung nach einem der Ansprüche 10 oder 11 einschließt.
